# EUROPÄISCHE PATENTSCHRIFT

(11) **EP 1 507 970 B1**
(45) Veröffentlichungstag und Bekanntmachung des Hinweises auf die Patenterteilung: **02.01.2008**
(21) Anmeldenummer: 03755081.1
(22) Anmeldetag: 20.05.2003
(51) Int. Cl.: F02F 3/00, F16J 1/00, F16B 43/02, F16C 11/06

(54) **KOLBEN FÜR VERBRENNUNGSMOTOREN**
PISTON FOR INTERNAL COMBUSTION ENGINES
PISTON POUR MOTEURS A COMBUSTION INTERNE

(30) Priorität: 24.05.2002 DE 10222938
(43) Veröffentlichungstag der Anmeldung: 23.02.2005
(73) Patentinhaber: MAHLE GMBH, D-70376 Stuttgart (DE)
(72) Erfinder: WEINKAUF, Dieter, 70197 Stuttgart (DE)
(74) Vertreter: Pohle, Reinhard
(86) Internationale Anmeldenummer: PCT/DE2003/001629
(87) Internationale Veröffentlichungsnummer: WO 2003/100238

(56) Entgegenhaltungen:
- DE-A- 2 647 250
- DE-A- 4 000 846
- FR-A- 1 209 949
- GB-A- 451 540
- US-A- 3 141 231
- HÜTTE: "DES INGENIEURS TASCHENBUCH" 1955 , WILHELM ERNST&SOHN , BERLIN XP002251734 Seite 144, Absatz 4 -Seite 145, Absatz 6

## Beschreibung

Die Erfindung betrifft einen Kolben für Verbrennungsmotoren nach dem Oberbegriff des Patentanspruchs 1.

Derartige gattungsgemäße Kolben sind beispielsweise aus der DE 26 47 250 C3 oder DE 40 00 846 C2 bekannt. Bei diesen Kolben sind die Auflageflächen der Dehnhülse und des Kolbens, an denen die Dehnhülse und der Kolben sich berühren, nur sehr gering gegen die normal zur Kolbenlängsachse verlaufende Ebene geneigt. Die Neigung der kolbenseitigen Aufnahmefläche hat dabei lediglich bearbeitungstechnische Vorteile und ist daher nur so groß, wie sie zur Erzielung einer guten Bearbeitung notwendig ist. Die Schräge wird dabei jeweils durch einen ringförmigen Kugelkalottenabschnitt erzielt, wobei dieser Abschnitt über einen getrennten Übergangsradius in die Wand der für die jeweilige Dehnhülse vorgesehenen Bohrung übergeht. Die Auflagefläche der jeweiligen zugehörigen Dehnhülse ist in diesen Fällen, in denen die kolbenseitige Aufnahmefläche konkav ausgebildet ist, entsprechend konvex. Die Krümmung beider Auflageflächen ist dabei jeweils insoweit unterschiedlich, dass sich im kalten Zustand ein nach außen erweiternder Ringspalt zwischen den Auflageflächen ergibt. Die Größe des Ringspaltes ist so ausgelegt, dass dieser im verspannten Zustand unter gleicher Vorspannung spaltfrei anliegt.

Bei der DE 26 47 250 C3 wird zur Vermeidung einer Überbeanspruchung des Innenbereiches der Bohrung, d.h. konkret der inneren Kante der Auflagefläche für die Dehnhülse, vorgeschlagen, die Mittelpunkte der Krümmungsradien der kreisförmigen konvexen Auflagefläche der Dehnhülse im Unterschied zu denjenigen der konkaven Gegenfläche des Kolbenunterteils neben die Längsachse der Dehnhülse zu legen. Dadurch soll die erste Berührung zwischen Dehnhülse und Kolbenunterteil radial gesehen im Mittelbereich der Auflagefläche zwischen Dehnhülse und Kolbenunterteil erfolgen. Beim Anziehen der Schraube erhalten die gegeneinander liegenden Auflageflächen dann von einer mittleren ersten Berührungslinie aus vollen Kontakt.

Bei der Ausführung gemäß DE 40 00 846 C2 geht die Auflagefläche des Kolbens für die Dehnhülse über einen Krümmungsradius R1 tangential in die Mantelfläche der die Dehnhülse enthaltenen Bohrungen über, dessen Wert größer ist als die Differenz der Radien der dortigen Bohrungen und derjenigen am Innenumfang der kolbenseitigen Dehnhülsenauflage. Dadurch soll erreicht werden, dass durch eine insgesamt größere Neigung der Auflagefläche zwischen Dehnhülse und Gegenlager des Kolbens eine größere Kraftübertragungsfläche zwischen Dehnhülse und kolbenseitigem Gegenlager bei vorgegebenem Durchmesser der die Dehnhülse aufnehmenden Bohrung erzielt wird.

Zwar werden durch diese Ausführung im verspannten Zustand die Auflagekräfte zwischen einem bestimmten Bereich der Auflagefläche etwa gleich groß, nachteilig ist aber, dass dieser Bereich noch sehr nahe der Kante der Aufnahmebohrung der Dehnhülse liegt, so dass die Gefahr von Spannungsrissen infolge Überlastung im Kolben nicht auszuschließen ist.

Aufgabe der Erfindung ist es, einen gattungsgemäßen Kolben zu schaffen, der einfach herstellbar und der eine gegenüber dem bekannten Stand der Technik verbesserte Kräfteeinleitung vom verbindenden Kolbenteil zum Kolben gestattet.

Gelöst wird die Aufgabe durch die Merkmale des einzigen Anspruchs.

Der grundsätzliche Vorteil besteht in dem genau definierten Kontaktbereich der Auflagefläche zwischen Druckstück und Gegenlager des Kolbens, wodurch eine Krafteinleitung in das Kolbenunterteil ermöglicht wird, ohne dass Risse oder Deformationen am Kolben entstehen. Insbesondere beim Anziehen der Dehnschraube wird der Spalt zwischen Druckstück und Auflagefläche, gemessen am Kolbendurchmesser, von radial außen nach innen geschlossen, sodass die am Kolbenunterteil bestehende Bohrung zur Aufnahme des Druckstücks entlastet ist. Damit sind plastische Deformationen praktisch ausgeschlossen. Ebenso wird der Übergangsbereich der Auflagefläche vom elliptischen zum zylindrischen Teil der Bohrung zur Druckstückaufnahme durch die reduzierte Hebelwirkung der Kontaktkraft entscheidend entlastet.

Ein Ausführungsbeispiel ist in den Zeichnungen dargestellt.
Die Figuren zeigen:

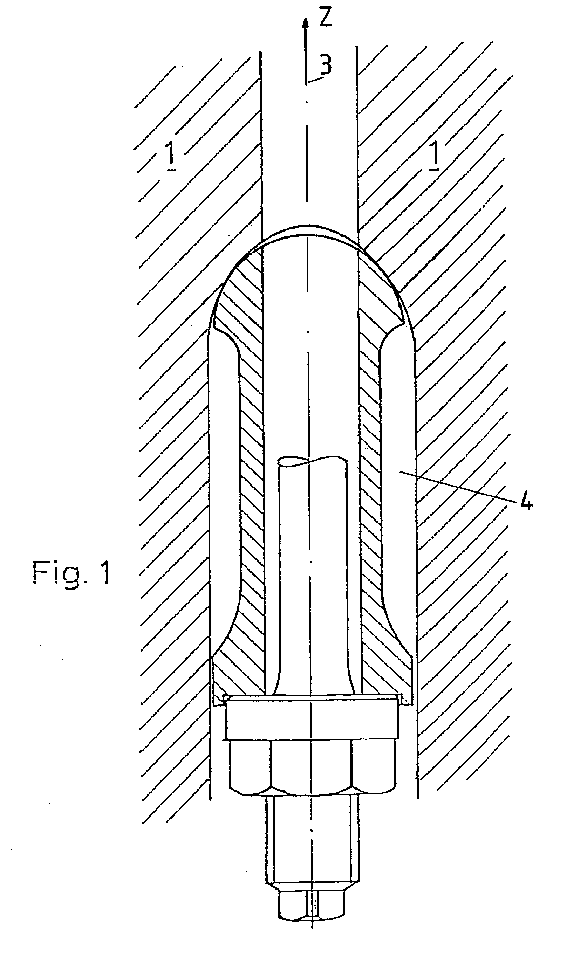

- Fig. 1: einen Schnitt durch ein in einer Aufnahmebohrung eines Kolbens gelagerten Druckstücks;

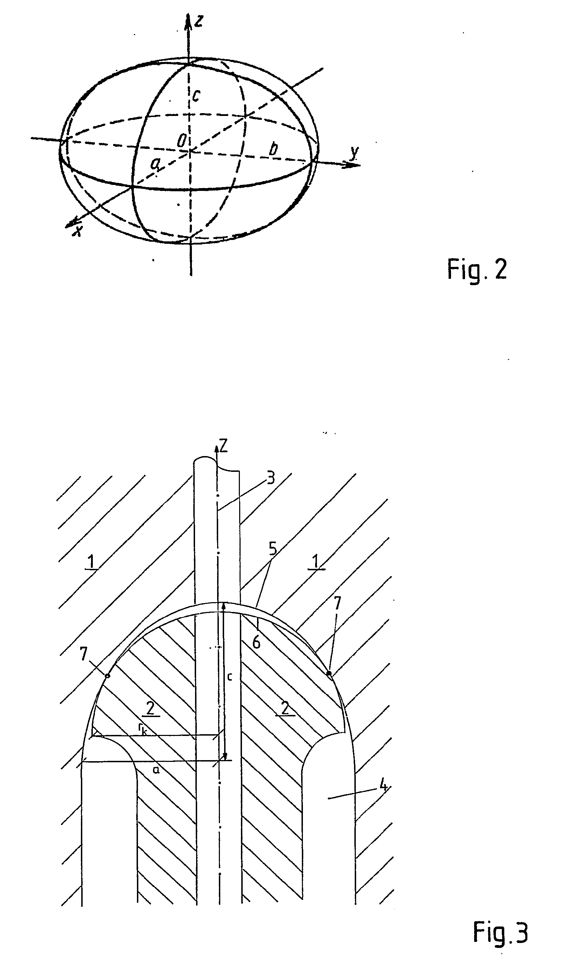

- Fig. 2: die Anordnung/Gestaltung der erfindungsgemäßen Auflagefläche des Kolbenunterteils;
- Fig. 3: einen Detailausschnitt der Auflageflächen nach Fig. 1.

Ein Kolbenunterteil 1 weist eine mit Bohrungs- bzw. Dehnschraubenachse 3 versehene Bohrung 4 auf, in der ein Druckstück 2 mit einer als Kugel geformten Auflagefläche 6 mit dem Radius rₖ angeordnet ist. Die Bohrung selbst hat den Radius a und ist in der Richtung der Raumkoordinate z im Endbereich als langgestreckte Rotationsellipse gemäß der in Anspruch 1 angegebenen Formel mit der großen Halbachse c ausgebildet. Die Koordinatenachse z des langgestreckten Rotationsellipsoids stimmt dabei mit der Achse 3 der Bohrung zur Aufnahme des Druckstücks 2 überein. Entsprechend der größenmäßigen Auslegung der Auflageflächen berühren sich im unverspannten Zustand somit die kugelförmige Auflagefläche 6 des Druckstückes 2 und die elliptische Auflagefläche 5 der Bohrung im Kolben 1 in den mit 7 gekennzeichneten Punkten. Diese liegen nach radial außen sehr nahe an dem Bohrungsdurchmesser. Durch Anziehen der Dehnschraube wandern diese entlang der elliptischen Auflagefläche 5 nach radial innen, bis der Spalt geschlossen ist. Damit erfolgt eine optimale Krafteinleitung in das Kolbenunterteil ohne Rissbildung oder plastischer Deformationen am Kolben.

## Patentansprüche

1. Kolben für Verbrennungsmotoren mit einem den Schaftbereich bildenden Unterteil und einem mit diesem über Dehnschrauben verbundenen, den Boden und Ringbereich bildenden Kolbenoberteil, bei dem die Dehnschrauben im Kolbenunterteil auf in jeweilige Bohrungen im Kolbenunterteil eingreifende Druckstücke aufliegen und bei denen die jeweilige Auflage zwischen Druckstück und Kolbenunterteil über geneigt gegeneinander verlaufende Flächen erfolgt,
**dadurch gekennzeichnet,**
**dass** die Auflagefläche des Kolbenunterteils (1) für das Druckstück (2) der Fläche eines langgestreckten Rotationsellipsoids der allgemeinen Formel x²/a² + y²/a²+z²/c²=1 folgt, wobei x, y und z die Koordinatenachsen und a und c die Halbachsen mit a < c definieren;
**dass** die Koordinatenachse z des langgestreckten Rotationsellipsoids mit der Achse der jeweiligen Bohrung zur Aufnahme des Druckstücks (2) übereinstimmt; und dass die Auflagefläche des Druckstücks (2) der Fläche einer Kugel der allgemeinen Formel X² + y² + Z² = rₖ² folgt, wobei gilt: rₖ < a.

## Claims

1. A piston for internal combustion engines with a lower part which forms the shaft area and an upper piston part which is connected thereto by means of expansion screws and which forms the crown and ring area, wherein the expansion screws in the lower piston part are disposed on pressure pieces engaging in respective bores in the lower piston part (1), and wherein the respective bearing between the pressure piece and the lower piston part is achieved by means of surfaces that are inclined relative to one another,
**characterised in that**
the bearing surface of the lower piston part (1) for the pressure piece (2) follows the surface of an elongated ellipsoid of revolution with the general formula x²/a² + y²/a² + z²/c² =1, wherein x, y, and z define the coordinate axes and a and c define the semiaxes with a < c;
**in that** the coordinate axis z of the elongated ellipsoid of revolution corresponds with the axis of the respective bore for mounting the pressure piece (2), and **in that** the bearing surface of the pressure piece (2) follows the surface of a sphere with the general formula X² +y² +Z² = rₖ², wherein rₖ < a.

## Revendications

1. Piston pour moteurs à combustion interne, comprenant une partie inférieure formant la zone de la tige et une partie supérieure de piston, assemblée avec cette dernière par l'intermédiaire de vis à tige allégée et formant le fond et la zone annulaire, piston dans lequel les vis à tige allégée s'appliquent dans la partie inférieure du piston sur des pièces de pression, qui s'engagent dans des alésages respectifs de la partie inférieure de piston, et dans lequel l'appui respectif entre la pièce de pression et la partie inférieure du piston s'effectue par l'intermédiaire de surfaces inclinées les unes par rapport aux autres,
**caractérisé en ce que**
la surface d'appui de la partie inférieure de piston (1) pour la pièce de pression (2) suit la surface d'une ellipsoïde de révolution allongée de formule générale x²/a² + y²/a² + z²/c² = 1, x, y et z définissant les axes de coordonnées et a et c les demi-axes avec a < c ;
l'axe de coordonnée z de l'ellipsoïde de révolution allongée coïncide avec l'axe de l'alésage respectif destiné à recevoir la pièce de pression (2) et la surface d'appui de la pièce de pression (2) suit la surface d'une sphère de formule générale x² + y² + z² = rₖ², avec rₖ < a.
